(19) Europäisches Patentamt
European Patent Office
Office européen des brevets

(11) **EP 2 053 793 A1**

(12) **DEMANDE DE BREVET EUROPEEN**

(43) Date de publication:
   **29.04.2009 Bulletin 2009/18**

(51) Int Cl.:
   ***H04L 12/413*** *(2006.01)*     ***H04L 29/06*** *(2006.01)*
   ***H04L 12/407*** *(2006.01)*

(21) Numéro de dépôt: **08165054.1**

(22) Date de dépôt: **25.09.2008**

(84) Etats contractants désignés:
   **AT BE BG CH CY CZ DE DK EE ES FI FR GB GR HR HU IE IS IT LI LT LU LV MC MT NL NO PL PT RO SE SI SK TR**
   Etats d'extension désignés:
   **AL BA MK RS**

(30) Priorité: **26.10.2007 FR 0758606**

(71) Demandeur: **Peugeot Citroën Automobiles SA**
   **78140 Vélizy-Villacoublay (FR)**

(72) Inventeurs:
   • **Perrault, Hervé**
     **92170 Vanves (FR)**
   • **Heller, Cédric**
     **92250 La Garenne Colombes (FR)**

(74) Mandataire: **Fernandez, Francis Lionel et al**
   **PSA Peugeot Citroen**
   **DRIA/PPIQ/BLE**
   **18, rue de Fauvelles**
   **92250 La Garenne-Colombes (FR)**

(54) **Procédé et système de communication en environnement pertubé**

(57)     Dans un procédé de communication sur un bus, un contrôleur de communication est déconnecté du bus en cas de taux d'erreur en émission au-delà d'un seuil prédéterminé et reconnecté au bus après un temps de réhabilitation.

    Le procédé comprend une étape adaptative (142) ordonnancée pour établir le temps de réhabilitation en fonction d'un taux de déconnexions.

FIG.3

**Description**

L'invention concerne les réseaux embarqués et plus particulièrement un procédé et un système de communication sur un bus dans lequel un contrôleur de communication est déconnecté du bus en cas de taux d'erreur en émission au-delà d'un seuil prédéterminé et reconnecté au bus après un temps de réhabilitation.

Dans les environnements perturbés par les parasites, les chocs ou les intempéries, la fiabilité des communications sur un bus dépend de l'état de bon fonctionnement de chaque entité physique reliée au bus. Lorsque les entités physiques sont des capteurs de mesure ou d'état, des actionneurs ou des contrôleurs de système, par exemple dans une automobile, dans une usine ou dans un système médical, la fiabilité des communications peut avoir des répercussions directes sur la sécurité.

Parmi les réseaux embarqués connus, on peut citer le bus VAN (acronyme de l'expression étrangère Vehicle Area Network) où une trame émise est soumise à un processus d'arbitrage. La maîtrise du délai de réponse y est assurée par le fait pour une réponse d'être contenue dans une même trame que la requête.

On connaît aussi la technologie de réseau SDS (acronyme de l'expression étrangère Smart Distributed System) centralisée sur des microcontrôleur répartis. Dans ce domaine, la demande de brevet US2002/0083378 divulgue une méthode de diagnostique de réseau comprenant au moins un équipement électronique basé sur la technologie CAN (acronyme de l'expression étrangère Controler Area Network). Les erreurs sur le bus sont comptabilisées dans des compteurs jusqu'à provoquer une déconnexion du gestionnaire de protocole pour lequel le ou les compteurs d'erreurs dépassent un certain seuil.

La technologie CAN est régie par la norme ISO 11 898 qui prévoie une reconnexion sur le bus du contrôleur défaillant après un temps de réhabilitation. La valeur du temps de réhabilitation, lorsqu'il est gravé dans le silicium du contrôleur ou établi en variable dans le logiciel, résulte d'études préalables qui font un compromis entre un temps trop court qui risque de générer des reconnexions intempestives et des temps trop longs qui ne prennent pas en compte les défauts fugitifs et défavorisent les performances du système. Lorsque plusieurs valeurs de temps de réhabilitation sont disponibles, il est nécessaire d'effectuer des essais sur site jusqu'à choisir la valeur qui donne le meilleur compromis entre performance et mise à l'écart d'un contrôleur réellement défectueux. Ces ajustement et mises au point peuvent être longues et fastidieuse et de plus ne pas reproduire les conditions réelles dans lesquelles fonctionne le réseau à un instant donné. Une valeur ajustée puis fixée d'une façon ou d'une autre peut être trop sévère à certains moments et trop laxiste à d'autres moments.

Pour remédier aux inconvénients de l'état antérieur de la technique, un objet de l'invention est un procédé qui comprend une étape adaptative ordonnancée pour établir le temps de réhabilitation en fonction d'un taux de déconnexions.

Avantageusement, le taux de déconnexions est celui du contrôleur de communication qui est déconnecté.

Particulièrement, l'étape adaptative est exécutée lorsque le contrôleur de communication est déconnecté.

Plus particulièrement, le procédé comprend une étape incrémentale dans laquelle le taux de déconnexions est augmenté chaque fois que le contrôleur de communication est déconnecté du bus.

Une variante de mise en oeuvre du procédé comprend une étape décrémentale dans laquelle le taux de déconnexions est diminué chaque fois que le contrôleur de communication émet sur le bus sans erreur.

Pour remédier aux inconvénients de l'état antérieur de la technique, un objet de l'invention est aussi un système de communication qui comprend un processeur agencé pour accéder à une première zone d'une mémoire de façon à établir le temps de réhabilitation en fonction d'un taux de déconnexions.

Avantageusement le système de communication comprend une deuxième zone de la mémoire agencée pour contenir le taux de déconnexions du coupleur pour lequel établir ledit temps de réhabilitation.

Particulièrement, le processeur est agencé pour accéder à la mémoire et au contrôleur de communication tant lorsque le coupleur est connecté que lorsque le contrôleur de communication n'est pas connecté au bus.

Plus particulièrement, la mémoire et le processeur sont agencés pour augmenter le taux de déconnexions contenu dans la deuxième zone chaque fois que le coupleur de communication est déconnecté du bus.

Dans une variante du système de communication, la mémoire et le processeur sont agencés pour diminuer le taux de déconnexions chaque fois que le contrôleur de communication émet sur le bus sans erreur.

D'autres buts, caractéristiques, détails et avantages de l'invention apparaîtront dans la description qui suit d'un mode de réalisation préféré, non limitatif de l'objet et de la portée de la présente demande de brevet, accompagnée de dessins, dans lesquels :

- la figure 1 est une représentation schématique de système de communication terrain ;
- la figure 2 représente une machine à états finis de gestionnaire de protocole ;
- les figures 3 à 5 montrent des étapes de procédé pour mettre en oeuvre l'invention ;
- la figure 6 est une table associative d'un mode particulier de mise en oeuvre de l'invention ;
- la figure 7 est un chronogramme d'évolution d'un gestionnaire de protocole.

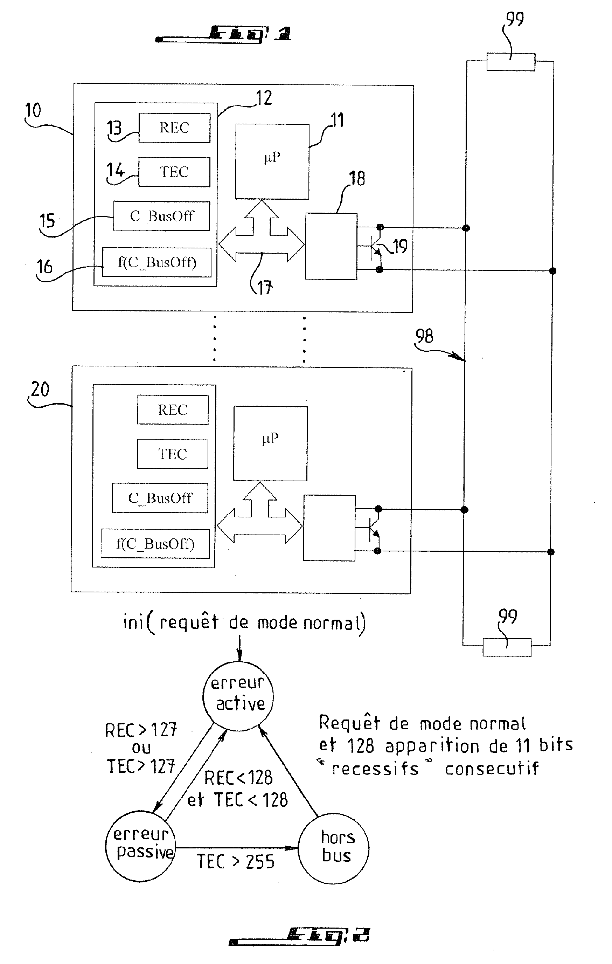

En référence à la figure 1, un système de communication comprend plusieurs entités physiques 10, 20 tels que des capteurs, des actionneurs, des contrôleurs et des émetteurs récepteurs à distance.

Le système de communication comprend aussi un bus 98 auquel chaque entité physique 10, 20 est reliée au moyen d'un contrôleur de communication 18 pour communiquer avec une autre entité physique du système de communication. A titre purement illustratif, le bus 98 est constitué de deux fils reliés entre eux à chacune de leurs extrémités par une impédance 99. Le contrôleur de communication 18 est relié au bus 98 par deux fils reliés entre eux au moyen d'un transistor 19 commandé par le contrôleur de communication 18. Un blocage du transistor 19 permet au contrôleur 18 de générer une différence de potentiel entre les deux fils du bus 98 ou de détecter une différence de potentiel existante entre ces deux fils du bus 98. Un état passant du transistor 19 court-circuite les deux fils du bus 98 et impose ainsi une différence de potentiel nul. On remarque deux états binaires possibles sur le bus 98, un état dominant à différence de potentiel nul car il suffit qu'un seul transistor 19 des entités physiques 10, 20, soit passant pour imposer une différence de potentiel nul sur le bus 98 et un état dit récessif lorsque tous les transistors 19 sont bloqués car il suffit d'un seul transistor 19 à l'état passant pour annuler la différence de potentiel sur le bus 98. Le transistor 19 est commandé par le contrôleur de communication 18 de façon à permettre au contrôleur de communication 18 d'émettre un bit dominant en mettant le transistor 19 à l'état passant et d'émettre un bit récessif ou de ne pas émettre de bit en mettant le transistor 19 à l'état bloqué. En réception, une impédance élevée dans le contrôleur 18 entre les deux pôles du transistor 19, permet au contrôleur 18 de lire un bit dominant lorsque la tension aux bornes du transistor 19 est nulle et de lire un bit récessif lorsque la différence de tension aux bornes du transistor 19 est non nulle. Dans chaque entité physique 10, 20, un bus interne 17 relie le coupleur 18 à un processeur 11 et à une mémoire 12. Le processeur 11 et la mémoire 12 sont agencés pour accéder au contrôleur 18 de façon à exécuter un gestionnaire de protocole GP. A cet effet, la mémoire 12 comprend un compteur 13 pour enregistrer une quantité d'erreurs en réception. La mémoire 12 comprend aussi un compteur 14 pour enregistrer une quantité d'erreurs en transmission. Pour simplifier les explications, on considérera les termes "transmission" et "émission" comme deux synonymes, il en sera de même des termes "transmettre" et "émettre".

L'exemple de réalisation de l'invention présenté en référence à la figure 1, s'applique à un réseau de type CAN. En référence à la figure 2, on rappelle que le gestionnaire de protocole GP évolue entre trois états, à savoir un état de gestion d'erreur en mode actif, un état de gestion d'erreur en mode passif et un état déconnecté du bus CAN. Le gestionnaire de protocole est dans le mode actif de détection d'erreurs à condition que la quantité d'erreurs en réception, c'est-à-dire la valeur contenue dans le compteur 13, et la quantité d'erreur en transmission, c'est-à-dire la valeur contenue dans le compteur 14, soient toutes deux inférieures à 128. Dès que le nombre d'erreurs en réception ou le nombre d'erreur en transmission est supérieur à 127, le gestionnaire de protocole passe en mode passif de détection d'erreurs. Dès que le nombre d'erreurs en transmission dépasse 255, le gestionnaire de protocole GP passe dans l'état BusOff, c'est-à-dire que le coupleur 18 est déconnecté du bus 98.

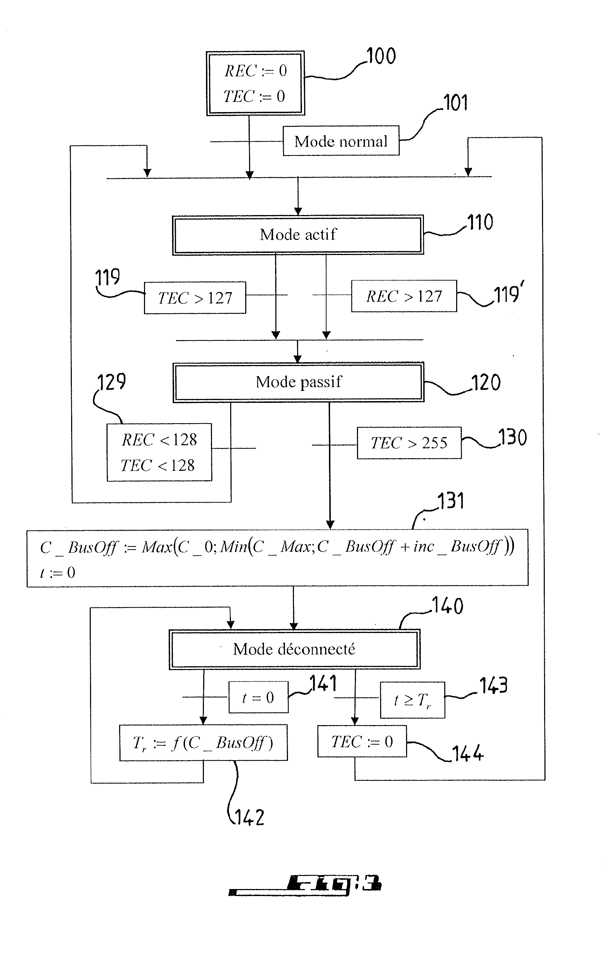

La figure 3 représente des étapes de procédé dans lequel interviennent les trois états mode actif, mode passif, mode déconnecté, expliquées précédemment en référence à la figure 2. Lorsque le procédé n'est pas activé, l'entité physique 10, 20 est dans un état initial 100, dans lequel des valeurs REC et TEC, respectivement contenues dans les compteurs 13 et 14, sont positionnées à zéro.

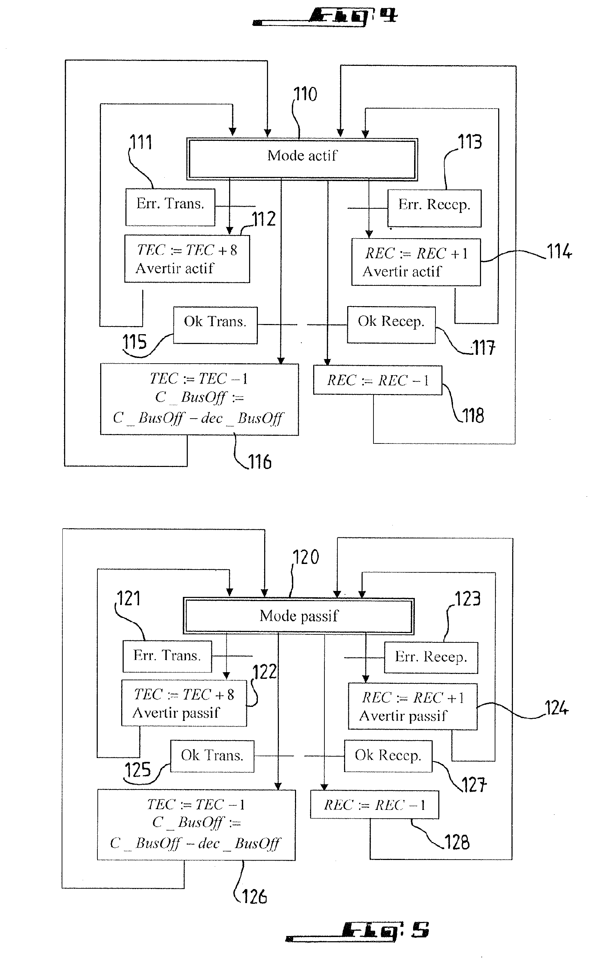

La validation d'une transition 101 par activation du mode normal place l'entité physique 10, 20, dans une étape de référence 110 correspondant à l'état de mode actif. Dans le mode actif, le procédé comprend différentes étapes expliquées à présent en référence à la figure 4.

A partir de l'étape de référence 110, la validation d'une transition 111 active une étape 112, la validation d'une transition 113 active une étape 114, la validation d'une transition 115 active une étape 116, et la validation d'une transition 117 active une étape 118. Cette transition 111 est validée par détection d'une transmission qui génère une erreur. La transition 115 est validée par une détection de transmission qui ne génère pas d'erreur. La transition 113 est validée par une détection de réception erronée. La transition 117 est validée par une détection de réception correcte.

Dans un réseau CAN classique, l'étape 112 est prévue pour ajouter huit à la valeur TEC et émettre un signal "activeflag" pour avertir d'une erreur détectée en mode actif. L'étape 114 est prévue pour ajouter un à la valeur REC et émettre un signal "activeflag" pour avertir d'une erreur détectée en mode actif. L'étape 116 est prévue pour retrancher 1 à la valeur TEC. L'étape 118 est prévue pour retrancher 1 à la valeur REC.

Revenant à la figure 3, la validation d'une transition 119 ou d'une transition 119' active une étape de référence 120 à partir de l'étape de référence 110. La transition 119 est validée par une détection de la valeur TEC qui dépasse 127. La transition 119' est validée par une détection de la valeur REC supérieure à 127.

Les étapes de procédés exécutés à partir de l'étape de référence 120 qui correspond au mode passif sont à présent expliqués en référence à la figure 5.

La validation d'une transition 121 active une étape 122, la validation d'une transition 123 active une étape 124, la validation d'une transition 125 active une étape 126 et la validation d'une transition 127 active une étape 128. La transition 121 est validée par une détection de transmission erronée, la transition 123 est validée par une détection de réception erronée, la transition 125 est validée par une détection de transmission correcte et la transition 127 est validée par une détection de réception correcte. L'étape 122 est prévue pour ajouter 8 à la valeur TEC et émettre un signal "passiveflag" pour avertir d'une détection d'erreurs en mode passif. L'étape 124 est prévue pour ajouter 1 à la valeur REC et émettre un signal "passiveflag" pour avertir d'une détection d'erreurs en mode passif. L'étape 126 est prévue pour retrancher 1 à la valeur TEC et l'étape 128 est prévue pour retrancher 1 à la valeur REC.

Revenant à la figure 3, la validation d'une transition 129 réactive l'étape de référence 110 à partir de l'étape de référence 120. La transition 129 est validée lorsque à la fois les valeurs REC et TEC sont toutes deux inférieures à 128.

L'étape de référence 140 correspondant au mode déconnecté, est activée après validation d'une transition 130. La transition 130 est validée lorsque le taux d'erreurs d'admission de valeurs TEC est au-delà d'un seuil prédéterminé 255 pour les réseaux CAN.

Dans une étape 131 activée par validation de la transition 130, une valeur de temps t est mise à zéro puis constamment incrémentée par une horloge du système de façon à représenter un temps.

Une transition 143 est validée lorsque le temps t est supérieur ou égal à une valeur $T_r$. La valeur $T_r$ est celle d'un temps de réhabilitation prévu pour reconnecter le contrôleur de communication 18 sur le bus lorsque le temps de réhabilitation est écoulé. Dans les systèmes de base, le temps de réhabilitation $T_r$ est généralement de valeur fixée. Dans des systèmes un peu plus évolués, il est paramétrable parmi un nombre de valeurs préenregistrées en mémoire permanente. On comprend que si le temps de réhabilitation $T_r$ est trop court, le gestionnaire de protocole GP risque de repasser trop vite du mode déconnecté au mode normal, actif ou passif alors que le défaut est encore présent. On comprend aussi que si le temps de réhabilitation $T_r$ est trop long, on risque d'attendre trop longtemps avant de repasser du mode déconnecté au mode normal, actif ou passif et de pénaliser ainsi le système de communication. Une validation de la transition 143 active une étape 144 dans laquelle la valeur TEC est remise à zéro avant de repasser dans l'étape 110 de référence.

De façon avantageuse, un procédé conforme à l'invention comprend une étape 142 dite adaptative qui est ordonnancée pour établir le temps de réhabilitation $T_r$ en fonction d'un taux de déconnexion. L'étape 142 est activée lorsqu'une transition 141 est validée par une détection de mise à zéro du temps t. Le taux de déconnexion C_BusOff pourrait concerner le taux de déconnexion de tous les contrôleurs reliés au bus 98. De préférence on individualise chaque contrôleur 18 de façon à tenir compte de son état particulier de raccordement au bus, des défauts locaux sur le bus ou dans l'entité physique qui héberge le contrôleur 18. Dans ce cas le taux de déconnexion est celui du contrôleur qui est déconnecté. Cette option permet aussi une plus grande autonomie dans la gestion de protocole en ne nécessitant pas un élément centralisé pour élaborer un taux de déconnexion en récoltant différentes informations sur le bus 98. Une exécution de l'étape adaptative 142 à chaque fois que le contrôleur est déconnecté permet d'adapter en permanence le temps de réhabilitation $T_r$ en tenant compte des conditions présentes dans le système de communication.

Le taux de connexion C_BusOff est alors calculé dans l'étape 131 en ajoutant un pas nommé inc_BusOff à une valeur précédente du taux de déconnexion C_BusOff. On limite la valeur obtenue entre une valeur maximale C_Max et une valeur minimale C_0.

Pour que le taux de déconnexion ne sature pas sur sa valeur maximale C_Max, on peut par exemple faire décroître régulièrement au cours du temps la valeur du taux de déconnexion C_BusOff. On peut ainsi espérer que deux déconnexions séparées par un long espace de temps, résultent d'un phénomène fugitif alors que des déconnexions séparées par un court intervalle de temps résultent d'un phénomène plus persistant. Cependant là encore, la pente de décroissance au cours du temps à donner au taux de déconnexion, est difficilement appréciable et pas nécessairement adaptée à tous les cas de figure.

De préférence, le taux de déconnexion est diminué chaque fois que le coupleur de communication émet sur le bus sans erreur en soustrayant dans l'étape 116 et dans l'étape 126 une valeur dec_BusOff à la valeur C_BusOff précédente.

Dans le système expliqué précédemment en référence à la figure 1 la mémoire 12 comprend alors une zone mémoire 15 par exemple sous forme de compteur pour contenir la valeur C_BusOff. La mémoire 12 comprend aussi une zone mémoire 16 accessible au processeur 11 de façon à établir le temps de réhabilitation $T_r$ en fonction du taux de déconnexion contenu dans la zone mémoire 15. Selon un premier mécanisme, à chaque passage du gestionnaire de protocole GP dans l'état BusOff, la valeur du temps de réhabilitation $T_r$ est calculée dans l'étape 142 au moyen de la formule :

$$T_r = (k_{Tr} \times C\_BusOff)$$

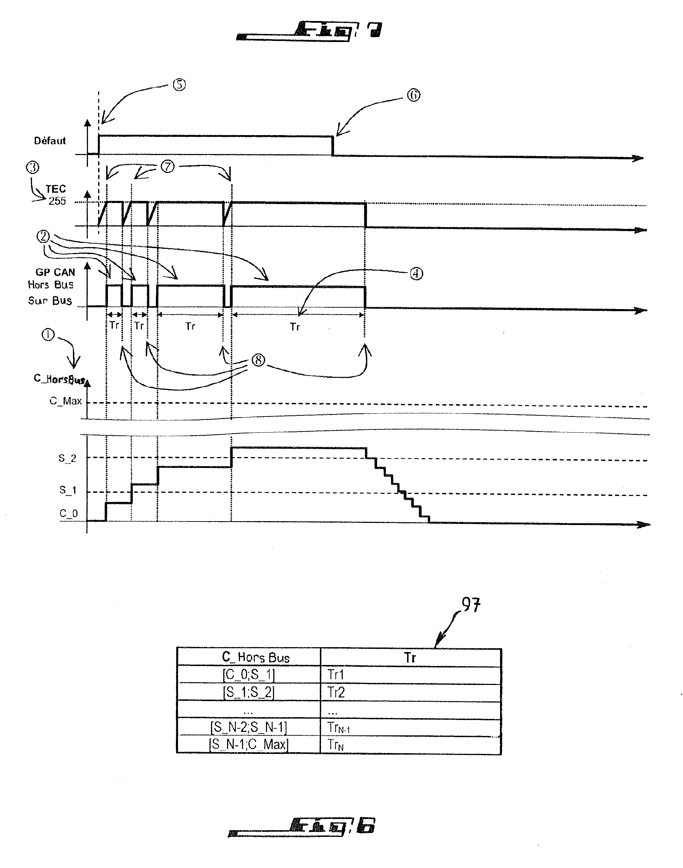

Les valeurs de $K_{Tr}$, inc_BusOff et C_Max sont à déterminer en fonction de l'évolution souhaitée de la valeur $T_r$ au cours du temps suite à une erreur. Pour ne pas à avoir à calculer en temps réel la valeur de $T_r$, la mémoire 12 peut comprendre une table associative expliquée à présent en référence à la figure 6. La table associative est un tableau à deux colonnes où la colonne d'entrée à gauche comprend sur chaque ligne une plage de variation du taux de déconnexion associée à une valeur de taux de réhabilitation mémorisée sur la même ligne dans la colonne de sortie à droite. La table associative 97 permet de mettre en oeuvre un second mécanisme pour exécuter l'étape 142. L'intervalle de valeur du taux de déconnexion [C_0 ; C_Max] est découpé en N tranches à chacune desquelles est attribuée une valeur

de T$_r$.

Le fonctionnement du procédé et du système de communication selon l'invention est expliqué à présent en référence à la figure 7 plus particulièrement dans le cas d'un réseau CAN régit par la norme ISO 11898. Pour rappel, la norme ISO 11898, prévoit qu'en cas de violation de protocole suite à un défaut 5 sur le réseau une valeur de compteur TEC soit incrémentée. Parmi les erreurs, on peut citer l'erreur "Bit", l'erreur "Stuff", l'erreur "CRC", l'erreur "FORM" et l'erreur "ACK". Nous avons vu précédemment en référence à la figure 1 que le contrôleur 18 permet d'envoyer un Bit sur le bus 98 et de lire simultanément le Bit présent sur le bus 98. L'erreur "Bit" correspond à un Bit envoyé différent du Bit reçu. C'est par exemple le cas lorsque le coupleur 18 émet un Bit récessif écrasé par un Bit dominant en dehors d'une phase d'arbitrage ou d'acquittement. Le gestionnaire de protocole GP détecte une erreur "STUFF" lorsqu'il reçoit six Bits consécutifs de même valeur dans une partie de message qui devrait être codée avec la méthode du sixième Bit opposé en cas de cinq Bits consécutifs de même valeur dite méthode de Stuffing. Le gestionnaire de protocole GP détecte une erreur "CRC" lorsque le contrôle de redondance cyclique calculé par le récepteur est différent de la valeur de contrôle de redondance cyclique contenue dans la trame. Le gestionnaire de protocole GP détecte une erreur "Form" lorsqu'un Bit qui devrait être à une certaine valeur comme par exemple un délimiteur, est à une valeur différente. Le gestionnaire de protocole GP détecte une erreur "ACK" lorsqu'en réponse à une émission, le coupleur de communication 18 ne reçoit pas de Bit dominant pendant l'intervalle de temps réservé à l'acquittement.

Lorsque la valeur de compteur TEC 3 atteint la valeur 255 en 7 sur la figure 7, le gestionnaire de protocole CAN se déconnecte du réseau (cet état est appelé "BusOff2") jusqu'à ce que le coeur numérique pilotant le gestionnaire de protocole demande une réhabilitation 8. On note sur la figure 7 que le temps de réhabilitation 4 appliqué entre l'apparition de l'état BusOff et la demande de réhabilitation, c'est-à-dire le moment où le gestionnaire de protocole est autorisé à reprendre la communication, est de longueur variable. L'utilisation d'un compteur pour déterminer la valeur du temps de réhabilitation T$_r$ de manière dynamique, permet d'avoir un temps de réhabilitation cohérent avec le comportement du défaut en cours. Ce compteur, de nature logicielle contient un taux de déconnexion C_BusOff1 borné par une valeur minimale appelée C_0 et par une valeur maximale appelée C_Max et pouvant prendre un nombre C_Pas de valeur possible entre C_0 et C_Max. La valeur de compteur C_BusOff est incrémentée d'un pas appelé inc_BusOff multiple entier de C_Pas, à chaque passage dans l'état BusOff7. Il est décrémenté d'un pas DEC_BusOff multiple entier de C_Pas à chaque trame correctement émise.

**Revendications**

1. Procédé de communication sur un bus dans lequel un coupleur de communication est déconnecté du bus en cas de taux d'erreur en émission au-delà d'un seuil prédéterminé et reconnecté au bus après un temps de réhabilitation, **caractérisé en ce qu'**il comprend :

   - une étape adaptative (142) ordonnancée pour établir ledit temps de réhabilitation en fonction d'un taux de déconnexions.

2. Procédé de communication selon la revendication 1, **caractérisé en ce que** le taux de déconnexions est celui du contrôleur de communication qui est déconnecté.

3. Procédé de communication selon la revendication 1 ou 2, **caractérisé en ce que** ladite étape adaptative (142) est exécutée lorsque le coupleur est déconnecté.

4. Procédé de communication selon l'une des revendications précédentes, **caractérisé en ce qu'**il comprend :

   - une étape incrémentale (131) dans laquelle le taux de déconnexions est augmenté chaque fois que ledit contrôleur de communication est déconnecté du bus.

5. Procédé de communication selon l'une des revendications précédentes, **caractérisé en ce qu'**il comprend :

   - une étape décrémentale (116, 126) dans laquelle le taux de déconnexions est diminué chaque fois que ledit contrôleur de communication émet sur le bus sans erreur.

6. Système de communication sur un bus (98) dans lequel un contrôleur de communication (18) est déconnectable du bus en cas de taux d'erreur en émission au-delà d'un seuil prédéterminé et reconnectable sur le bus après un temps de réhabilitation, **caractérisé en ce qu'**il comprend :

   - un processeur (11) agencé pour accéder à une première zone (16) d'une mémoire (12) de façon à établir ledit temps de réhabilitation en fonction d'un taux de déconnexions.

7. Système de communication selon la revendication 6, **caractérisé en ce qu'**il comprend une deuxième zone (15) de la mémoire (12) agencée pour contenir le taux de déconnexions du coupleur pour lequel établir ledit temps de réhabilitation.

**8.** Système de communication selon la revendication 6 ou 7, **caractérisé en ce que** le processeur (11) est agencé pour accéder à la mémoire (12) et au contrôleur (18) tant lorsque le coupleur (18) est connecté que lorsque le contrôleur (18) n'est pas connecté au bus (98).

**9.** Système de communication selon l'une des revendications 6 à 8, **caractérisé en ce que** la mémoire (12) et le processeur (11) sont agencés pour augmenter le taux de déconnexions contenu dans la deuxième zone (15) chaque fois que le coupleur de communication (18) est déconnecté du bus.

**10.** Système de communication selon l'une des revendications 6 à 9, **caractérisé en ce que** la mémoire (12) et le processeur (11) sont agencés pour diminuer le taux de déconnexions chaque fois que le coupleur de communication (18) émet sur le bus sans erreur.

**Fig. 1**

10

13 REC
12
14 TEC
11
μP
15 C_BusOff
18
16 f(C_BusOff)
17
19

99

98

20
REC
TEC
μP
C_BusOff
f(C_BusOff)

99

ini( requêt de mode normal)

erreur
active

REC > 127
ou
TEC > 127

REC < 128
et TEC < 128

Requêt de mode normal
et 128 apparition de 11 bits
" recessifs " consecutif

erreur
passive

TEC > 255

hors
bus

**Fig. 2**

$$REC := 0$$
$$TEC := 0$$ — 100

Mode normal — 101

Mode actif — 110

119 — $TEC > 127$    $REC > 127$ — 119′

Mode passif — 120

129 — $REC < 128$    $TEC > 255$ — 130
$TEC < 128$

131 — $C\_BusOff := Max\big(C\_0; Min\big(C\_Max; C\_BusOff + inc\_BusOff\big)\big)$
$t := 0$

Mode déconnecté — 140

$t = 0$ — 141    $t \geq T_r$ — 143

$T_r := f(C\_BusOff)$    $TEC := 0$ — 144

142

**Fig.3**

Fig. 4

110

111

Mode actif

113

Err. Trans.

112

Err. Recep.

$TEC := TEC + 8$
Avertir actif

$REC := REC + 1$
Avertir actif

114

Ok Trans.

Ok Recep.

115

117

$TEC := TEC - 1$
$C\_BusOff :=$
$C\_BusOff - dec\_BusOff$

$REC := REC - 1$

118

116

120

121

Mode passif

123

Err. Trans.

122

Err. Recep.

$TEC := TEC + 8$
Avertir passif

$REC := REC + 1$
Avertir passif

124

Ok Trans.

Ok Recep.

125

127

$TEC := TEC - 1$
$C\_BusOff :=$
$C\_BusOff - dec\_BusOff$

$REC := REC - 1$

128

126

Fig. 5

_Fig. 7_

⑤
⑥

Défaut

③
⑦
TEC
255

②
GP CAN
Hors Bus
Sur Bus

④

Tr    Tr    Tr    Tr

①

C_HorsBus

C_Max

⑧

S_2

S_1

C_0

97

| C_ Hors Bus | Tr |
|---|---|
| [C_0;S_1] | Tr1 |
| [S_1;S_2] | Tr2 |
| ... | ... |
| [S_N-2;S_N-1] | Tr$_{N-1}$ |
| [S_N-1;C_Max] | Tr$_N$ |

_Fig. 6_

Europäisches
Patentamt

European
Patent Office

Office européen
des brevets

**RAPPORT DE RECHERCHE EUROPEENNE**

Numéro de la demande

EP 08 16 5054

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GE ET AL: "An analytic study of tuning systems parameters in IEEE 802.11e enhanced distributed channel access" COMPUTER NETWORKS, ELSEVIER SCIENCE PUBLISHERS B.V., AMSTERDAM, NL, vol. 51, no. 8, 23 mars 2007 (2007-03-23), pages 1955-1980, XP005936323 ISSN: 1389-1286 * partie 2.1 * | 1-10 | INV. H04L12/413 H04L29/06 H04L12/407 |
| A,D | US 2002/083378 A1 (NICKELS ROBERT ALEN [US]) 27 juin 2002 (2002-06-27) * abrégé * * alinéa [0025] * | 1-10 | |
| A | US 5 600 782 A (THOMSON THOMAS W S [US]) 4 février 1997 (1997-02-04) * abrégé * * figures 5,6 * * colonne 2, ligne 34 - ligne 54 * * colonne 4, ligne 19 - ligne 31 * * colonne 10, ligne 28 - ligne 50 * | 1-10 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| La Haye | 24 octobre 2008 | Borges, Pedro |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 08 16 5054

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-10-2008

| Document brevet cité au rapport de recherche | Date de publication | Membre(s) de la famille de brevet(s) | Date de publication |
|---|---|---|---|
| US 2002083378 A1 | 27-06-2002 | AUCUN | |
| US 5600782 A | 04-02-1997 | EP 0668000 A1 | 23-08-1995 |
| | | WO 9506378 A1 | 02-03-1995 |
| | | US 5574848 A | 12-11-1996 |

EPO FORM P0460

Pour tout renseignement concernant cette annexe : voir Journal Officiel de l'Office européen des brevets, No.12/82

**EP 2 053 793 A1**

## RÉFÉRENCES CITÉES DANS LA DESCRIPTION

**Documents brevets cités dans la description**

*   US 20020083378 A